# EUROPÄISCHE PATENTSCHRIFT

(11) **EP 1 491 602 B1**
(45) Veröffentlichungstag und Bekanntmachung des Hinweises auf die Patenterteilung: **15.08.2007**
(21) Anmeldenummer: 04014240.8
(22) Anmeldetag: 17.06.2004
(51) Int. Cl.: C09D 183/04, C08J 5/12, C08K 5/544, C08K 5/14, C09J 183/04

(54) **Grundiermittel für Siliconkautschuk**
Primer for silicone rubber
Composition d'apprêtage pour adhésion de caoutchouc de silicones

(30) Priorität: 26.06.2003 DE 10328843
(43) Veröffentlichungstag der Anmeldung: 29.12.2004
(73) Patentinhaber: Wacker Chemie AG, 81737 München (DE)
(72) Erfinder: Fehn, Armin, Dr., 84561 Mehring (DE); Kuhn, Arvid, Dr., 84453 Mühldorf (DE)
(74) Vertreter: Deffner-Lehner, Maria

(56) Entgegenhaltungen:
- EP-A- 0 446 830
- US-A- 4 287 114

## Beschreibung

Gegenstand der Erfindung sind Grundiermittelzusammensetzungen und deren Herstellung, sowie ein Verfahren zur Verbesserung der Haftung von Siliconkautschuk auf einem Substrat, insbesondere zum Verkleben von Siliconkautschuk mit einem Substrat, daraus resultierende Verbundformteile und Verbundmaterialien, sowie deren Verwendung.

In US 3,769,253 sind Grundiermittelzusammensetzungen, welche Polydiorganosiloxane mit Vinylgruppen, organische Peroxide und Acyloxy-Gruppen aufweisende Silane enthalten, beschrieben. Ein großer Nachteil der Grundierungen ist, dass die Haftung auf Metallen nicht optimal ist. Diese Grundierungen haben den weiteren Nachteil, dass bedingt durch frei werdende Carbonsäuren (aus den Acyloxygruppen) sowohl die Stabilität des Siliconelastomers herabgesetzt ist, als auch die Korrosion auf dem Substrat, insbesondere bei Metallen, erleichtert wird.

Aus EP-A 61 871 sind Grundiermittelzusammensetzungen bekannt, die eine alkoxyhaltige Siliciumverbindung, gegebenenfalls deren partielle Hydrolysekondensate, ein organisches Lösungsmittel und ein Hydroperoxid enthalten. Ersetzt man das Hydroperoxid durch Dialkylperoxide bzw. Diarylperoxide so wird eine schlechtere Haftung erzielt.

In US 6,409,874 wird ein Verfahren zur Herstellung eines Silicon-Metall-Haftverbundes beschrieben. Hierbei wird das Metallsubstrat oder das Siliconelastomer-Substrat zuerst mit einer Mischung aus einem unfunktionellen und einem funktionellen Alkoxygruppen aufweisenden Silan, wobei die Silane teilweise hydrolysiert sind, in Kontakt gebracht und anschließend beide Substrate zusammengebracht.

Aufgabe der Erfindung ist es, die Nachteile des Standes der Technik zu überwinden und die Haftung von Siliconkautschuk auf verschiedenen Substraten, insbesondere auf Metallen, zu verbessern. Die Aufgabe wird durch die Erfindung gelöst.

Gegenstand der Erfindung sind Grundiermittelzusammensetzungen bestehend aus
(A) 100 Gew.-teile im wesentlichen lineare Organopolysiloxane der allgemeinen Formel

   R¹_{g}R_{3-g}SiO(SiR₂O)ₙ(SiRR¹O)ₘSiR_{3-g}R²_{g} (IV)

   wobei
   R einen Hydroxylrest oder einen einwertigen, gegebenenfalls halogensubstituierten oder O-, N-, S-, oder P-Atome enthaltenden Kohlenwasserstoffrest mit 1 bis 20 Kohlenstoffatomen, der frei von aliphatisch ungesättigten Gruppen ist, bedeutet,
   R¹ einen einwertigen, aliphatisch ungesättigten, gegebenenfalls halogensubstituierten oder O- oder N-Atome enthaltenden Kohlenwasserstoffrest mit 1 bis 10 Kohlenstoffatomen bedeutet,
   g 0, 1, 2 oder 3 bedeutet,
   m eine ganze Zahl von 20 bis 200, ist und
   n eine ganze Zahl von 10 bis 4000, ist,
(B) 5 bis 500 Gew.-teile Organosiliciumverbindungen mit mindestens einer hydrolysierbaren Gruppe ausgewählt aus der Gruppe der allgemeinen Formel

   R²_{c}R³_{d}Si(X)ₑ (II)

   und

   (X)_{e'}R²_{c},R³_{d},Si-R⁴-SiR²_{c},R³_{d},Si(X)_{e'} (III)

   wobei
   R² einen gegebenenfalls halogensubstituierten einwertigen Kohlenwasserstoffrest mit 1 bis 20 Kohlenstoffatomen bedeutet,
   R³ einen einwertigen Rest, ausgewählt aus der Gruppe bestehend aus Alkenylresten und Y-R⁴-Resten, bedeutet,
   X eine hydrolysierbare Gruppe ausgewählt aus den Gruppen -OR², -NR²₂ , R²-C(=O)-N(R²)- oder -O-N=CR²₂ ist,
   Y ein einwertiger Rest, ausgewählt aus der Gruppe bestehend aus Anhydrid-, Aminoalkoxy-, Acryloxy-, Methacryloxy-, N-Aminoalkylamino-, Sulfon-, Sulfonat-, Phosphat-, Phosphonat-, Amino-, N-Alkylamino, Epoxy-, und Mercaptoresten ist,
   R⁴ ein zweiwertiger, gegebenenfalls O-Atome enthaltender Kohlenwasserstoffrest mit 1 bis 20 Kohlenstoffatomen je Rest ist und
   c und d jeweils 0, 1, 2 oder 3 und
   e 1, 2, 3 oder 4 bedeuten,
   mit der Maßgabe, dass die Summe c+d+e=4 ist,
   c' und d' jeweils 0, 1 oder 2 und
   e' 1, 2 oder 3 bedeuten,
   mit der Maßgabe, dass die Summe c'+d'+e'=3 ist,
(C) 5 bis 500 Gew.-teile Füllstoffe, ausgewählt aus der Gruppe der verstärkenden Füllstoffe
(D) 10 bis 2000 Gew.-teile Lösungsmittel ausgewählt aus der Gruppe der organischen Lösungsmittel und der niedermolekularen cyclischen oder linearen Polyorganosiliciumverbindungen,
(E) 0 bis 80 Gew.-teile Vernetzungsmittel ausgewählt aus der Gruppe der Dialkylperoxide, Diarylperoxide, Alkylarylperoxide, Aralkylperoxide und Hydroperoxide,
(F) 0 bis 50 Gew.-teile Kondensationskatalysatoren und
(G) 0 bis 50 Gew.-teile weitere Stoffe ausgewählt aus der Gruppe der inaktiven Füllstoffe, Pigmente, Farbstoffe, Hitzestabilisatoren, Alkinole, Benzotriazole, Triazole, Fasern und Kunststoffpulver.

Das Molekulargewicht (mittels NMR bestimmtes Zahlenmittel Mₙ) des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan handeln, jedoch auch um ein über seitenständige und gegebenenfalls endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel Mₙ).

Selbstverständlich können auch Mischungen unterschiedlicher, den Kriterien des Bestandteils (A) genügender Siloxane eingesetzt werden.

Für eine gute Haftung weist Komponente (A) bevorzugt mehr als 20 seitenständige Si-gebundene Vinylgruppen pro Molekül auf. Die Endgruppen der Komponente (A) können dabei zusätzlich Si-gebundene Vinylgruppen aufweisen, ohne dass dies zwingend ist.

Die Organopolysiloxane (A) weisen vorzugsweise eine Viskosität von 0,001 bis 50 000 Pa·s bei 25°C , bevorzugt 0,05 bis 20 000 Pa·s bei 25°C, besonders bevorzugt 0,1 bis 200 Pa·s bei 25°C, auf.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest, sowie alle für R oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Acryloxygruppen, Methacryloxygruppen, Hydroxygruppen und Halogengruppen substituiert sein können.

Beispiele für Reste R¹ sind Alkenylreste, wie der Vinyl-, 5-Hexenyl-, Cyclohexenyl-, 1-Propenyl-, Allyl-, 3-Butenyl- und 4-Pentenylrest, und Alkinylreste, wie der Ethinyl-, Propargylund 1-Propinylrest.
Bevorzugt handelt es sich bei dem Rest R¹ um Alkenylreste, wobei der Vinylrest besonders bevorzugt ist.

Beispiele für Kohlenwasserstoffreste R und halogensubstituierte Kohlenwasserstoffreste R gelten auch für Kohlenwasserstoffreste R² und halogensubstituierte Kohlenwasserstoffreste R².

Beispiele für Alkenylreste R¹ gelten auch für Alkenylreste R³, wobei der Vinylrest bevorzugt ist.

Beispiele für Reste R⁴ sind zweiwertige Kohlenwasserstoffreste, wie Methylen-, Ethylen-, Propylen-, Butylen-, Phenylen- und Xylylenreste, und -CH₂CH(CH₃)-C₆H₄-CH(CH₃)CH₂-, -CH₂CH₂-C₆H₄-CH₂CH₂-, und substituierte Reste, wie Hydroxykohlenwasserstoffreste und Etherreste, wie -CH₂O(CH₂)₃-, -CH₂CH₂-O-CH₂CH₂-, -CH₂CH₂-O-CH(CH₃)CH₂-, -CH₂-O-CH₂CH₂-O-CH₂-, - CH₂CH₂CH₂-O-CH₂CH₂CH₂- und -CH₂CH₂CH₂-OC(=O)O-CH₂CH₂CH₂-.

Beispiele für Organosiliciumverbindungen (B) der Formel (II) sind Alkoxysilane, wie Vinyltrimethoxysilan, Vinyltriethoxysilan, Methylvinyldimethoxysilan, Dimethylvinylmethoxysilan, Vinyltris(methoxypropoxy)silan, Vinyltris(2-methoxyethoxy)silan, 3-(Methacryloxy)propyltrimethoxysilan, 3-(Methacryloxy)methyltrimethoxysilan, 3-(Methacryloxy)methyltriethoxysilan, 3-(Methacryloxy)propyltriethoxysilan, 3-(Methacryloxy)propylmethyldimethoxysilan, 3-(Methacryloxy)propyldimethylmethoxysilan, 3-(Acryloxy)propyltriethoxysilan, Allyltrimethoxysilan, Allyltriethoxysilan, Allylmethyldiethoxysilan, Mercaptopropyltrimethoxysilane, Mercaptopropylmethyldimethoxysilane, 3-(2-Aminoethylamino)propyltrimethoxysilan, 3-(2-(Aminoethylamino)propylmethyldimethoxysilan, 3-Cyclohexylaminopropyltrimethoxysilan, 3-Aminopropyltriethoxysilan, Mercaptopropyltrimethoxysilan, 3-Mercaptopropylmethyldiethoxysilan, 3-(Glycidoxy)propyltrimethoxysilan, 3-(Glycidoxy)propylmethyldimethoxysilan, 2-(3,4-Epoxycyclohexyl)ethyltrimethoxysilan, 3-Isocyanatopropyltrimethoxysilan, 3-Isocyanatopropylmethyldimethoxysilan, 3-Isocyanatopropyltriethoxysilan, 3-Isocyanatopropylmethyldiethoxysilan, (Isocyanatomethyl)trimethoxysilan, (Isocyanatomethyl)methyldimethoxysilan, (Isocyanatomethyl)triethoxysilan, (Isocyanatomethyl)methyldiethoxysilan, (Aminomethyl)trimethoxysilan, (Aminomethyl)methyldimethoxysilan (Anilinomethyl)trimethoxysilan, (Anilinomethyl)methyldimethoxysilan, (Anilinomethyl)triethoxysilan, (Hexylaminomethyl)trimethoxysilan, (Hexylaminomethyl)methyldimethoxysilan, 3-(Triethoxysilyl)propylbernsteinsäureanhydrid, 3-Cyanopropyltrimethoxysilan, Tetramethoxysilan, Tetraethoxysilan, Tetrapropoxysilan, Tetrabutoxysilan, Chlorpropyltrimethoxysilan, Chlormethyltrimethoxysilan, Chlormethyldimethoxysilan, Methyltrimethoxysilan, Methyltriethoxysilan, Isooctyltrimethoxysilan, Cyclohexylmethyldimethoxysilan. Weitere Beispiele sind Aminosilane, Aldoximo- und Ketoximosilane, wie Tris(butylamino)vinylsilan und Tris(diethylamino)vinylsiloxan. Beispiele für Organosiliciumverbindungen (B) der Formel (III) sind 1,2-Bis(methyldiethoxysilyl)ethan, 1,2-Bis(trimethoxysilyl)ethan und 1,2-Bis(triethoxysilyl)ethan.

Die Organosiliciumverbindungen (B) werden vorzugsweise in Mengen von 15 bis 300 Gewichtsteile, jeweils bezogen auf 100 Gewichtsteile Organopolysiloxane (A) eingesetzt.

Beispiele für verstärkende Füllstoffe, die als Komponente (C) in den erfindungsgemäßen Massen eingesetzt werden können, sind pyrogene oder gefällte Kieselsäuren mit BET-Oberflächen von mindestens 50 m²/g sowie Ruße und Aktivkohlen wie Furnace-Ruß und Acetylen-Ruß, wobei pyrogene und gefällte Kieselsäuren mit BET-Oberflächen von mindestens 50 m²/g bevorzugt sind.
Die genannten Kieselsäurefüllstoffe können hydrophilen Charakter haben oder nach bekannten Verfahren hydrophobiert sein. Beim Einmischen hydrophiler Füllstoffe ist die Zugabe eines Hydrophobierungsmittels erforderlich. Falls hydrophile Füllstoffe verwendet werden, so geschieht die Hydrophobierung zweckmäßig, aber nicht zwangsläufig in einem separaten Schritt. Hierzu wird Komponente (A) mit dem hydrophilen Füllstoff in Gegenwart eines Hydrophobierungsmittels nach, dem Fachmann, bekannten Methoden vermischt.
Die Füllstoffe (C) werden vorzugsweise in Mengen von 15 bis 60 Gewichtsteile, jeweils bezogen auf 100 Gewichtsteile Organopolysiloxane (A) eingesetzt.

Die Komponenten (A) bis (C) und gegebenenfalls weitere Bestandteile werden vorzugsweise in Komponente (D) gelöst, teilweise gelöst, emulgiert und/oder suspendiert. Beispiele für (D) sind organische Lösungsmittel und/oder Lösungsmittelabmischungen von zwei oder mehr Lösungsmittel, wie gegebenenfalls substituierte Alkane, wie Pentan, Heptan, Hexan, Octan, Isooctan, Nonan, Decan, Methylenchlorid, Trichlorethylen und deren Mischungen; ggf. subsituierte Aromaten, wie Benzol, Toluol, Xylole, Chlorbenzol und deren Mischungen; gegebenenfalls substituierte Ester, wie Essigsäureethylester, Ketone, wie Aceton, Methylethylketon, gegebenenfalls subsituierte Alkohole, wie Methanol, Ethanol, Isopropanol, Propanol, Butanol, Ethylhexanol und gegebenenfalls substituierte Ether, wie Tetrahydrofuran, Diethylether, Dibutylether, Tert.-Butylmethylether, Dibutylether, Ethylenglycoldimethylether und der Mischungen.

Lösungsmittel (D) werden vorzugsweise in Mengen von 100 bis 600 Gewichtsteile, jeweils bezogen auf 100 Gewichtsteile Organopolysiloxane (A) eingesetzt.

Außer den Komponenten (A) bis (D) können die erfindungsgemäßen Grundiermittelzusammensetzungen noch weitere Stoffe enthalten.

Bevorzugt wird den Komponenten (A) bis (D) als weiteren Bestandteil die Komponente (E) zugesetzt. Bei Komponente (E) handelt es sich um ein Vernetzungsmittel ausgewählt aus der Gruppe der Dialkylperoxide, Diarylperoxide, Alkylarylperoxide, Aralkylperoxide und Hydroperoxide. Der Anteil an Komponente (E) beträgt vorzugsweise 0,5 bis 40 Gewichtsteile, jeweils bezogen auf 100 Gewichtsteile von Organopolysiloxane (A).

Beispiele für Vernetzungsmittel (E) sind Bis(2,4-dichlorbenzoyl)peroxid, Dicumylperoxid, Dibenzoylperoxid, Di-tert.-Butylperoxid, 1,1-Di-tert.-butylperoxy-3,3,5-trimethyl-cyclohexan, 2,5-Bis(tert.-butylperoxy)-2,5-dimethylhexan, Bis(4-Methylbenzoyl)peroxid, Vinyl-tris(tert.-butylperoxid)silan, Cumylhydroperoxid, tert.-Butylhydroperoxid, Cyclohexylhydroperoxid und 2,4,4-Trimethylpentyl-2-hydroperoxid.

Für den Zweck, die Eigenschaften der Grundiermittelzusammensetzung weiter zu verbessern oder zu modifizieren können weitere Komponenten zugesetzt werden.

Die erfindungsgemäße Grundiermittelzusammensetzung kann als Komponente (F) Kondensationskatalysatoren, wie Metallsalze, die die Hydrolyse und/oder Kondensation der hydrolysierbaren Guppen der Komponente (B) katalysieren, enthalten. Bevorzugt handelt es sich hierbei um Chelate des Metalls M und/oder metallische Alkoxide der Formel M(OR⁵)ₙ und/oder metallische Carboxylate der Formel M(O₂CR⁵)ₙ mit n = Valenz von M und R⁵ ausgewählt aus der Gruppe der Reste R und R¹, wie bereits oben definiert, wobei M aus der durch Ti, Zr, Cu, Ge, Mn, Fe, Al, Mg, Zn gebildeten Gruppe gewählt wird. Bevorzugt handelt es sich bei R⁵ um lineare oder verzeigte Alkyl- oder Alkyenreste mit 1-8 Kohlenstoffatome, und M wird bevorzugt aus der durch Ti, Zr, Fe, Al, Zn gebildeten Gruppe gewählt. Besonders bevorzugt handelt es sich bei R⁵ um Ethyl-, Propyl, Isopropyl-, Butyl-, Acryl-, Methacryl, Ethenyl- und Methylethenylreste und bei M um Ti, Al, Zn.

Beispiele für Komponente (F) sind Tetrabutyltitanat, Tetraisopropyltitanat, Diisopropoxy-bis(acetylacetonat)titanat, Diisopropoxy-bis(ethylacetylacetonat)titanat, Zirkontetrabutylat, Zirkontetrabutyrat, Zirkontetrapropylat, Zirkondiacetat, Zirkontetra(acetylacetonat), Zinkdimethacrylat, Tributoxyzirkonacetylacetonat, Aluminiumtris(acetylacetonat), Aluminiumtriisopropylat, und Aluminiumtris(ethylacetylacetonat).

Kondensationskatalysatoren (F) werden vorzugsweise in Mengen von 0,1 bis 10 Gewichtsteile und bevorzugt 1 bis 5 Gewichtteile, jeweils bezogen auf 100 Gewichtsteile Organopolysiloxane (A), eingesetzt.

Die erfindungsgemäße Grundiermittelzusammensetzung kann wahlweise als Komponente (G) weitere Stoffe enthalten. Diese Stoffe können sein inaktive Füllstoffe, wie Quarzmehl, Diatomeenerde, Tone, Kreide, Lithopone; Dispergierhilfsmittel; Pigmente; Farbstoffe; Hitzestabilisatoren, wie Ruße, Graphit und Metallverbindungen, wie Platinkomplexe; Alkinole; Benzotriazole; Triazole; Fasern, wie Glasfasern und Kunststofffasern; und Kunststoffpulver. Der Anteil an Komponente (G) hängt stark von der jeweilig verwendeten Verbindung und der beabsichtigten Anwendung ab und kann in Mengen von 0 bis 50 Gewichtsteilen, jeweils bezogen auf 100 Gewichtsteile Organopolysiloxane (A) eingesetzt werden.

Bei den erfindungsgemäß eingesetzten Komponenten (A) bis (G) kann es sich jeweils um eine einzelne Art einer solchen Komponente, wie auch um ein Gemisch aus mindestens zwei verschiedenen Arten einer solchen Komponente handeln.

Die Herstellung der erfindungsgemäßen Grundiermittelzusammensetzung kann nach bekannten Verfahren erfolgen, wie beispielsweise durch gleichmäßige Vermischung der einzelnen Komponenten (A), (B), (C), (D) und gegebenenfalls (E), (F) und (G). Die Reihenfolge dabei ist beliebig. Die Vermischung erfolgt dabei abhängig von der Viskosität der Organopolysiloxane (A) z.B. mit einem Rührer, in einem Dissolver, auf einer Walze oder in einem Kneter.

Mit der erfindungsgemäßen Grundiermittelzusammensetzung können Siliconkautschuke und -elastomere auf unterschiedlichsten Substraten zum Haften gebracht werden.

Gegenstand der Erfindung ist daher ein Verfahren zur Verbesserung der Haftung von Siliconkautschuk auf einem Substrat durch Auftragen der erfindungsgemäßen Grundiermittelzusammensetzung auf das Substrat, Trocknen- oder Vernetzenlassen der Grundiermittelzusammensetzung, um ein mit dem Grundiermittel überzogenes Substrat zu bilden, Auftragen einer vernetzbaren Siliconkautschukzusammensetzung auf das mit dem Grundiermittel überzogene Substrat, um einen Verbund zu erhalten, Aushärten des Verbundes, um einen Haftverbund eines Siliconkautschuks mit einem Substrat zu erhalten.

Beispiele für Substrate sind Metalle, wie Eisen, Aluminium, Kupfer, Zink, Edelstahl, Messing, Bronze und deren Legierungen; Kunststoffe, wie Naturkautschuk, Epoxy-, Polyester-, Polyamidharze, PVC und PBT; und anorganische Materialien, wie Glas, Glasfasern, Mörtel und Asbest.

Als vernetzbare Siliconkautschukzusammensetzung können alle gebräuchlichen und bisher bekannten peroxidvernetzenden, additionsvernetzenden und kondensationsvernetzenden Siliconkautschukzusammensetzungen und Fluorsiliconkautschukzusammensetzungen eingesetzt werden. Es sind dies peroxidvernetzende und additionsvernetzende (wie platinvernetzende) HTV-Massen, LSR-Massen und additionsvernetzende (wie platinvernetzende) und kondensationvernetzende RTV-2-Massen, wobei die Grundiermittelzusammensetzung bevorzugt bei peroxid- und platinvernetzenden HTV-Massen, LSR-Massen und platinvernetzenden RTV-2-Massen eingesetzt wird und besonders bevorzugt bei peroxidvernetzenden HTV-Massen. HTV-, LSR- und RTV-Massen sind dem Fachmann hinlänglich bekannt.

Die Herstellung des Haftverbunds geschieht nach dem Fachmann im Grunde bekannten Verfahren. Bevorzugt wird der Haftverbund hergestellt, indem das Substrat nach bekannten Methoden gereinigt (u.a. sandgestrahlt, gestrahlt, geschliffen, abgedreht, geätzt) und/oder entfettet wird und anschließend die Grundiermittelzusammensetzung nach bekannten Verfahren, wie z.B. Sprühen, Walzen, Pinseln, Rakeln und Tauchen, auf das Substrat aufgebracht wird. Die Grundiermittelzusammensetzung wird vorzugsweise bei Temperaturen zwischen 0°C und 150°C, bevorzugt 20°C bis 100°C, besonders bevorzugt 20°C bis 50°C, für vorzugsweise 1 min bis 100 Std. getrocknet. Anschließend wird der unvulkanisierte Siliconkautschuk auf das grundierte Substrat aufgebracht und vorzugsweise bei Temperaturen zwischen 80°C und 250°C, bevorzugt 130°C bis 200°C, für vorzugsweise 1 Sekunde bis 10 Stunden zu einem Verbundmaterial vernetzt. Hierbei können alle bisher bekannten Verfahren zum Aufbringen von Siliconmassen auf Substraten verwendet werden, wie z. B.
Spritzgießen, Extrudieren, Press-Moulding, Compression-Moulding, Transfer-Moulding und allgemein Pressen. Anschließend kann der Haftverbund bei Bedarf bei Temperaturen oberhalb von Raumtemperatur für einige Zeit getempert werden. Die Bedingungen sind abhängig vom verwendeten Substrat und der Art des Siliconkautschuks. Für Metalle wird das grundierte Substrat vorzugsweise mit dem unvulkanisierten Siliconkautschuk für vorzugsweise 30 Sekunden bis 20 min, bevorzugt 5 bis 10 min, bei einer Temperatur von vorzugsweise 160°C bis 200°C unter Druck vulkanisiert und gegebenenfalls anschließend für vorzugsweise 2 bis 6 Stunden, bevorzugt 4 Stunden, bei 200°C getempert. Der Druck kann dabei innerhalb weiter Grenzen variieren und zwar von Umgebungsdruck bis hin zu sehr hohen Drücken. Die Haftung kann häufig durch höhere Vernetzungstemperaturen und längere Vernetzungszeiten verbessert werden. Das grundierte Substrat kann bis zu 2 Monate lagern, bevor es mit dem Siliconkautschuk, nach dem beschriebenen Verfahren, verklebt wird.

Die Grundiermittelzusammensetzungen können insbesondere überall dort mit Vorteil eingesetzt werden, wo eine gute Haftfestigkeit zwischen einem peroxidvernetzenden oder additionsvernetzten Siliconelastomer und einem Substrat, vorzugsweise bestehend aus organischen Kunststoffen, Metallen oder Gläsern, erwünscht wird. Das Substrat kann als Formteil, Folie oder Beschichtung vorliegen.

Die Grundiermittelzusammensetzung eignet sich zur Herstellung von Verbundmaterial durch Beschichten, Verkleben, Vergießen und zur Herstellung von Formartikeln.
Insbesondere eignen sich die Grundiermittelzusammensetzungen zum Verguss und zum Verkleben elektrischer und elektronischer Teile sowie zur Herstellung von Verbundformteilen. Unter Verbundformteilen wird hier ein einheitlicher Formartikel aus einem Verbundmaterial verstanden, der aus einem aus den Siliconzusammensetzungen hergestellten Siliconelastomerteil und mindestens einem Substrat so zusammengesetzt ist, dass zwischen beiden Teilen eine feste, dauerhafte Verbindung besteht. Verbundmaterialien und insbesondere Verbundformteile können in vielfältigsten Anwendungsbereichen zum Einsatz kommen, z.B. in der Elektronik-, Haushaltsgeräte-, Gebrauchsgüter-, Bau- und Automobilindustrie, in der Medizintechnik und in der Sport- und Freizeitartikelherstellung.

Die folgenden Beispiele dienen zur Veranschaulichung der Erfindung ohne diese einzuschränken.

In den nachstehend beschriebenen Beispielen beziehen sich alle Angaben von Teilen und Prozentsätzen, falls nicht anders angegeben, auf das Gewicht. Des weiteren beziehen sich alle Viskositätsangaben auf eine Temperatur von 25°C. Sofern nicht anders angegeben, werden die nachstehenden Beispiele bei einem Druck der umgebenden Atmosphäre, also etwa 1020 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiel 1: Grundierung 1

60 Teile einer hydrophoben pyrogenen Kieselsäure mit einer Oberfläche nach BET von 300 m²/g und einem Kohlenstoffgehalt von 3,95 Gew.-%, 100 Teile eines Vinyldimethylsiloxy-terminierten Polydimethylsiloxans mit durchschnittlich 25 seitenständigen Vinylgruppen und einer Viskosität von 700 mm²/s, 300 Teile Methacrylsäure-[3-trimethoxysilyl]-propylester und 600 Teile Toluol wurden mit einem Dissolver bei Raumtemperatur 30 min innig vermischt.

### Beispiel 2: Grundierung 2

Analog Grundierung 1, mit der Abänderung, dass vor dem Rühren noch 10 Teile Titan(IV)butylat zugegeben wurden.

### Beispiel 3: Grundierung 3

Analog Grundierung 2, mit der Abänderung, dass vor dem Rühren noch 7 Teile Dicumylperoxid zugegeben wurden.

### Beispiel 4: Grundierung 4

75,2 Teile eines Vinyldimethylsiloxy-terminierten Polydimethylsiloxans mit durchschnittlich 200 seitenständigen Vinylgruppen pro Molekül und mit einer Brabender-Plastizität von 530 Nm entsprechend einer mittleren Molmasse (Zahlenmittel) von ca. 400 000 g/mol wurden mit 6,2 Teile eines Polydiorganosiloxans, welches als Endgruppen Hydroxy-Gruppen aufweist und deren Gehalt an OH-Gruppen bei 4 Gew-% liegt, mit einem Teil Hexamethylsilazan und mit 20,0 Teile einer hydrophilen pyrogenen Kieselsäure mit einer Oberfläche nach BET von 300 m²/g (käuflich unter der Bezeichnung "HDK® T 30" bei er Wacker-Chemie GmbH), die in 6-7 Portionen zudosiert wurde, innerhalb von 4 Stunden in einem Kneter zu einer homogenen Masse vermischt.

Zu 200 Teilen der so erhaltenen Mischung wurden 100 Teile Vinyltrimethoxysilan, 30 Teile Tetraethoxysilan und 400 Teile Isopar E (es handelt sich hierbei um C,- bis C₁₀-Isoalkane) gegeben und die resultierende Mischung wurde mit einem Rührer bei Raumtemperatur vermischt.

### Beispiel 5: Grundierung 5

Analog Grundierung 4, mit der Abänderung, dass vor dem Rühren noch 5 Teile Titan(IV)butylat zugegeben wurden.

### Beispiel 6: Grundierung 6

Analog Grundierung 5, mit der Abänderung, dass vor dem Rühren noch 20 Teile Bis(2,4-dichlorbenzoyl)peroxid zugegeben wurden.

### Beispiel 7: Grundierung 7

65 Teile eines Vinyldimethylsiloxy-terminierten Polydimethylsiloxans mit durchschnittlich 30 seitenständigen Vinylgruppen pro Molekül und mit einer Brabender-Plastizität von 530 Nm entsprechend einer mittleren Molmasse (Zahlenmittel) von ca. 400 000 g/mol wurden mit 4,0 Teile eines Polydiorganosiloxans, welches als Endgruppen Hydroxy-Gruppen aufweist und deren Gehalt an OH-Gruppen bei 4 Gew-% liegt, in einem Kneter Vorgelegt. Anschließend wurden 26,0 Teile einer hydrophilen pyrogenen Kieselsäure mit einer Oberfläche nach BET von 300 m²/g (käuflich unter der Bezeichnung "HDK^{®} T 30" bei der Wacker-Chemie GmbH) in 6-7 Portionen zudosiert und innerhalb von 3 Stunden zu einer homogenen Masse vermischt. Zuletzt wurde die Mischung bei 150°C im Vakuum 2 Std. geknetet, um flüchtige Bestandteile zu entfernen.
660 Teile dieser Mischung, 100 Teile eines Vinyldimethylsiloxy-terminierten Polydimethylsiloxans mit durchschnittlich 35 seitenständigen Vinylgruppen und einer Viskosität von 680 mm²/s, 500 Teile Vinyltrimethoxysilan, 50 Teile Titantetrabutylat, 1000 Teile Isopar E, 1000 Teile Xylol und 70 Teile Dicumylperoxid wurden mit einem Rührer homogenisiert.

### Vergleichsversuch 1: Grundierung 8

100 Teile eines Vinyldimethylsiloxy-terminierten Polydimethylsiloxans mit durchschnittlich 25 seitenständigen Vinylgruppen und einer Viskosität von 700 mm²/s, 300 Teile Methacrylsäure-[3-trimethoxysilyl]-propylester und 600 Teile Toluol wurden mit einem Rührer bei Raumtemperatur 30 min innig vermischt.

### Vergleichsversuch 2: Grundierung 9

60 Teile einer hydrophoben pyrogenen Kieselsäure mit einer Oberfläche nach BET von 300 m²/g und einem Kohlenstoffgehalt von 3,95 Gew.-%, 100 Teile eines Vinyldimethylsiloxy-terminierten Polydimethylsiloxans ohne seitenständige Vinylgruppen und einer Viskosität von 700 mm²/s, 300 Teile Methacrylsäure-[3-trimethoxysilyl]-propylester und 600 Teile Toluol wurden mit einem Dissolver bei Raumtemperatur 30 min innig vermischt.

### Vergleichsversuch 3: Grundierung 10

60 Teile einer hydrophoben pyrogenen Kieselsäure mit einer Oberfläche nach BET von 300 m²/g und einem Kohlenstoffgehalt von 3,95 Gew.-%, 100 Teile eines Vinyldimethylsiloxy-terminierten Polydimethylsiloxans mit durchschnittlich 25 seitenständigen Vinylgruppen und einer Viskosität von 700 mm²/s, und 600 Teile Toluol wurden mit einem Dissolver bei Raumtemperatur 30 min innig vermischt.

### Beispiel 8: Charakterisierung der Haftung

Die metallischen Substratplättchen (BxLxD=25 mm x 60 mm x 3 mm) wurden sandgestrahlt und dann mit Aceton entfettet, während die Kunststoffplättchen nur mit Aceton, Ethanol oder Toluol entfettet wurden. Anschließend wurde das Substrat mit der zu testenden Grundierung bestrichen und mit einem Rakel auf vergleichbare Schichtdicke gebracht. Die so grundierten Plättchen wurden eine Stunde an Luft gelagert, bevor sie in eine Edelstahlpressform eingelegt und die Form mit einer Siliconelastomermasse gefüllt wurde. Als Siliconelastomermasse wurde ELASTOSIL® R 101/45 (erhältlich bei der Fa. Wacker-Chemie GmbH), welche 0,7 Gew.-% Dicumylperoxid enthielt verwendet. Ähnliche Werte wurden mit alternativen peroxidisch vernetzenden und additionsvernetzenden Siliconmassen (HTV- und LSR-Massen) erhalten.

Die Pressvulkanisation erfolgte, während 15 min bei einer Temperatur von 165°C und einer Schließkraft von 30 to (unget.). Abschließend wurden die Haftverbunde mit Metallsubstrate im Umlufttrockenschrank bei 200°C für 4 Stunden getempert (get.). Nach Entnahme des Haftverbunds wurde der starre Substratkörper fest eingespannt und die maximale Trennkraft bestimmt, die notwendig ist, den anhaftenden Siliconelastomerstreifen im Schälversuch abzulösen. Die Bestimmung der Trennkraft erfolgte gemäß DIN 53531 (mit folgenden Besonderheiten: die Dicke der Trägerplatte betrug 3 mm und die Dicke des Elastomers über der Trägerplatte betrug 5 mm) und wird in N/mm angegeben. Je Beispiel wurden 5 Haftverbunde gemessen, die Trennkraft als Mittelwert bestimmt und der Anteil an kohäsivem Versagen in Prozent ermittelt. Kohäsives Versagen von 0% bedeutet, dass das Siliconelastomer vollständig und rückstandsfrei von der Substratoberfläche abgelöst wurde. Kohäsives Versagen von 100% bedeutet, dass die Delaminierung ausschließlich durch Risswachstum innerhalb des Siliconelastomers erfolgte.

Die Haftung der erfindungsgemäßen sowie nicht erfindungsgemäßen Grundierungsmittelzusammensetzungen wurden auf folgenden Substraten getestet:
I. Polybutylenterephthalat (PBT): Ultradur® B4300G6 (BASF AG; 30% GF)
II. Polyamid 6: Durethan® BKV30 (Bayer AG; 30%GF)
III. Polyamid 6.6: Ultramid® A3WG6 (BASF AG; 30%GF)
IV. Aluminium (Industriequalität)
V. Stahl: V2A-Stahl (Industriequalität)
VI. Stahl ST 37 (Industriequalität)

Die Ergebnisse sind in der Tabelle zusammengefasst.

**Tabelle:**

| Abrissspannung in [N/mm]; | | | | | | |
|---|---|---|---|---|---|---|
| Anteil kohäsives Versagen in [%] | | | | | | |
| | Substrat I | Substrat II | Substrat III | Substrat IV | Substrat V | Substrat VI |
| Grundierung | [N/mm]/ [%] | [N/mm]/ [%] | [N/mm]/ [%] | [N/mm]/ [%] | [N/mm]/ [%] | [N/mm]/ [%] |
| 1 | - | - | - | - | - | 7,9/100 |
| 2 . | 10,7/100 | 10,8/100 | 10,3/100 | 10,0/100 | 10,1/100 | 9,0/100 |
| 3 | 11,2/100 | 11,5/100 | 12,0/100 | 10,3/100 | 11,2/100 | 11,0/100 |
| 4 | - | - | - | 9,2/100 | 8,9/100 | 9,4/100 |
| 5 | 9,2/100 | 9,0/100 | 9,4/100 | 9,8/100 | 9,8/100 | 10,1/100 |
| 6 | 10,1/100 | 9,4/100 | 11,4/100 | 10,6/100 | 8,0/80 | 11,4/100 |
| 7 | 11,0/100 | 9,9/100 | 9,7/100 | 11,1/100 | 10,9/100 | 12,2/100 |
| 8 | 7,8/50 | 4,5/30 | 3,0/0 | 6,7/50 | 5,0/50 | 4,5/50 |
| 9 | 4,2/30 | 3,8/30 | 4,0/30 | 8,2/80 | 4,0/30 | 3,0/30 |
| 10 | k.H. | k.H. | k.H. | k.H. | k.H. | k.H. |

| | | | | | | |
|---|---|---|---|---|---|---|
| k.H. keine Haftung - nicht getestet | | | | | | |

Die in der Tabelle angegebenen Werte belegen die hohe Haftfestigkeit zwischen dem Siliconelastomer und diversen organischen Kunststoffen bzw. Metallen bei Verwendung der erfindungsgemäßen Grundiermittelzusammensetzungen (Grundierung 1 bis 7).

Wie anhand der Grundierungen 8, 9 und 10 (Vergleichsversuche) zu ersehen ist, führt das Fehlen eines der essentiellen Bestandteile der erfindungsgemäßen Grundiermittelzusammensetzungen zu einer wesentlich geringeren Haftfestigkeit. Nur wenn alle erfindungsgemäßen Bestandteile vorliegen, wird eine hohe Haftfestigkeit erzielt. Dies ist Beleg einer Synergie der Bestandteile (A) bis (C).

Durch Zugabe der Bestandteile E oder F bzw. E und F kann die Haftung, wie aus den Beispielen ersichtlich ist, nochmals verbessert werden.

## Patentansprüche

1. Grundiermittelzusammensetzungen bestehend aus
(A) 100 Gew.-teile im wesentlichen lineare Organopolysiloxane der allgemeinen Formel
R¹_{g}R_{3-g}SiO (SiR₂O)ₙ(SiRR¹O)ₘSiR_{3-g}R¹_{g} (IV)
wobei
R einen Hydroxylrest oder einen einwertigen, gegebenenfalls halogensubstituierten oder O-, N-, S-, oder P-Atome enthaltenden Kohlenwasserstoffrest mit 1 bis 20 Kohlenstoffatomen, der frei von aliphatisch ungesättigten Gruppen ist, bedeutet,
R¹ einen einwertigen, aliphatisch ungesättigten, gegebenenfalls halogensubstituierten oder O- oder N-Atome enthaltenden Kohlenwasserstoffrest mit 1 bis 10 Kohlenstoffatomen bedeutet,
g 0, 1, 2 oder 3 bedeutet,
m eine ganze Zahl von 20 bis 200 ist und
n eine ganze Zahl von 10 bis 4 000 ist,
(B) 5 bis 500 Gew.-teile Organosiliciumverbindungen mit mindestens einer hydrolysierbaren Gruppe ausgewählt aus der Gruppe der allgemeinen Formel
R²_{c}R³_{d}Si(X)ₑ (II)
und
(X)_{e'}R²_{c'}R³_{d'}Si-R⁴-SiR²_{c'}R³_{d'}Si(X)_{e'}. (III)
wobei
R² einen gegebenenfalls halogensubstituierten einwertigen Kohlenwasserstoffrest mit 1 bis 20 Kohlenstoffatomen bedeutet,
R³ einen einwertigen Rest, ausgewählt aus der Gruppe bestehend aus Alkenylresten und Y-R⁴-Resten, bedeutet,
X eine hydrolisierbare Gruppe ausgewählt aus den Gruppen -OR², -NR²₂ , R²-C(=O)-N(R²)-, oder -O-N=CR²₂ ist,
Y ein einwertiger Rest, ausgewählt aus der Gruppe bestehend aus Anhydrid-, Aminoalkoxy-, Acryloxy-, Methacryloxy-, N-Aminoalkylamino-, Sulfon-, Sulfonat-, Phosphat-, Phosphonat-, Amino-, N-Alkylamino, Epoxy- und Mercaptoresten ist,
R⁴ ein zweiwertiger, gegebenenfalls O-Atome enthaltender Kohlenwasserstoffrest mit 1 bis 20 Kohlenstoffatomen je Rest ist und
c und d jeweils 0, 1, 2 oder 3 und
e 1, 2, 3 oder 4 bedeuten,
mit der Maßgabe, dass die Summe c+d+e=4 ist,
c' und d' jeweils 0, 1 oder 2 und
e' 1, 2 oder 3 bedeuten,
mit der Maßgabe, dass die Summe c'+d'+e'=3 ist,
(C) 5 bis 500 Gew.-teile Füllstoffe, ausgewählt aus der Gruppe der verstärkenden Füllstoffe
(D) 10 bis 2000 Gew.-teile Lösungsmittel ausgewählt aus der Gruppe der organischen Lösungsmittel und der niedermolekularen cyclischen oder linearen Polyorganosiliciumverbindungen,
(E) 0 bis 80 Gew.-teile Vernetzungsmittel ausgewählt aus der Gruppe der Dialkylperoxide, Diarylperoxide, Alkylarylperoxide, Aralkylperoxide und Hydroperoxide,
(F) 0 bis 50 Gew.-teile Kondensationskatalysatoren und
(G) 0 bis 50 Gew.-teile weitere Stoffe ausgewählt aus der Gruppe der inaktiven Füllstoffe, Pigmente, Farbstoffe, Hitzestabilisatoren, Alkinole, Benzotriazole, Triazole, Fasern und Kunststoffpulver.

2. Grundiermittelzusammensetzungen nach Anspruch 1, **dadurch gekennzeichnet, dass** die Organopolysiloxane (A) eine Viskosität von 0,001 Pa.s bis 50 000 Pa.s bei 25°C aufweisen.

3. Grundiermittelzusammensetzungen nach Anspruch 1 oder 2, **dadurch gekennzeichnet, dass** R¹ im Organopolysiloxan (A) ein Vinylrest ist.

4. Grundiermittelzusammensetzungen nach Anspruch 1, 2 oder 3, **dadurch gekennzeichnet, dass** X in der Organosiliciumverbindung (B) ein Rest der Formel -OR² ist, wobei R² die im Anspruch 1 angegebene Bedeutung hat.

5. Grundiermittelzusammensetzungen nach einem der Ansprüche 1 bis 4, **dadurch gekennzeichnet, dass** als Organosiliciumverbindung (B) der Formel (II) 3-(Methacryloxy)propyl-trimethoxysilan, 3-(Methacryloxy)propyltriethoxysilan, Vinyltrimethoxysilan oder Vinyltriethoxysilan eingesetzt wird.

6. Grundiermittelzusammensetzungen nach einem der Ansprüche 1 bis 4, **dadurch gekennzeichnet, dass** als Organosiliciumverbindung (B) der Formel (III) 1,2-Bis(trimethoxysilyl)-ethan oder 1,2-Bis(triethoxysilyl)ethan eingesetzt wird.

7. Grundiermittelzusammensetzungen nach einem der Ansprüche 1 bis 6, **dadurch gekennzeichnet, dass** als Füllstoffe (C) verstärkende Füllstoffe ausgewählt aus der Gruppe der pyrogenen und gefällten Kieselsäuren, die hydrophobiert sein können, eingesetzt werden.

8. Verfahren zur Herstellung der Grundiermittelzusämmensetzungen nach einem der Ansprüche 1 bis 7, **dadurch gekennzeichnet, dass** die Bestandteile (A), (B), (C), (D) und gegebenenfalls (E), (F) und (G) vermischt werden.

9. Verfahren zur Verbesserung der Haftung von Siliconkautschuk auf einem Substrat durch Auftragen einer Grundiermittelzusammensetzung gemäß einem der Ansprüche 1 bis 7 auf das Substrat, Trocknen- oder Vernetzenlassen der Grundiermittelzusammensetzung, um ein mit dem Grundiermittel überzogenes Substrat zu bilden, Auftragen einer vernetzbaren Siliconkautschukzusammensetzung auf das mit dem Grundiermittel überzogene Substrat, um einen Verbund zu erhalten, Aushärten des Verbundes, um einen Haftverbund eines Siliconkautschuks mit einem Substrat zu erhalten.

10. Verfahren nach Anspruch 9, **dadurch gekennzeichnet, dass** der Siliconkautschuk mit dem Substrat verklebt wird.

11. Verfahren nach Anspruch 9 oder 10, **dadurch gekennzeichnet, dass** das Substrat ein organischer Kunststoff, ein Metall oder ein Glas ist.

12. Verfahren nach Anspruch 9, 10 oder 11, **dadurch gekennzeichnet, dass** das Substrat ein Formteil, eine Folie oder eine Beschichtung ist.

13. Verfahren nach einem der Ansprüche 9 bis 12, **dadurch gekennzeichnet, dass** die vernetzbare Siliconkautschukzusammensetzung eine peroxidvernetzende oder additionsvernetzende Siliconkautschukzusammensetzung ist.

14. Verbundformteile oder Verbundmaterialien hergestellt nach einem der Verfahren gemäß den Ansprüchen 9 bis 13.

15. Verwendung der Verbundformteile oder Verbundmaterialien gemäß Anspruch 14 in der Automobil-, Haushaltsgeräte- oder Elektronikindustrie.

## Claims

1. Primer compositions consisting of
(A) 100 parts by weight of substantially linear organopolysiloxanes of the general formula
R¹_{g}R_{3-g}SiO (SiR₂O)ₙ(SiRR¹O)ₘSiR_{3-g}R¹_{g} (IV)
in which
R is a hydroxyl radical or a monovalent hydrocarbon radical which is optionally halogen-substituted or contains O, N, S or P atoms, has 1 to 20 carbon atoms and is free of aliphatically unsaturated groups,
R¹ is a monovalent, aliphatically unsaturated hydrocarbon radical which is optionally halogen-substituted or contains O or N atoms and has 1 to 10 carbon atoms,
g is 0, 1, 2 or 3,
m is an integer from 20 to 200, and
n is an integer from 10 to 4000,
(B) form 5 to 500 parts by weight of organosilicon compounds having at least one hydrolysable group selected from the group of the general formula
R²_{c}R³_{d}Si(X)ₑ (II)
and
(X)_{e'}²_{c'}R³_{d'}Si-R⁴-SiR²_{c'}R³_{d'}Si (X)_{e'} (III)
in which
R² is an optionally halogen-substituted monovalent hydrocarbon radical having 1 to 20 carbon atoms,
R³ is a monovalent radical selected from the group consisting of alkenyl radicals and Y-R⁴ radicals,
X is a hydrolysable group selected from the groups -OR², -NR²₂, R²-C (=O) -N(R²)- or -O-N=CR²₂,
Y is a monovalent radical selected from the group consisting of anhydride, aminoalkoxy, acryloyloxy, methacryloyloxy, N-aminoalkylamino, sulphone, sulphonate, phosphate, phosphonate, amino, N-alkylamino, epoxy and mercapto radicals,
R⁴ is a divalent hydrocarbon radical optionally containing O atoms and having 1 to 20 carbon atoms per radical and
c and d are each 0, 1, 2 or 3 and
e is 1, 2, 3 or 4,
with the proviso that the sum c+d+e=4,
c' and d' are each 0, 1 or 2 and
e' is 1, 2 cr 3,
with the proviso that the sum c'+d'+e'=3,
(C) from 5 to 500 parts by weight of fillers selected from the group consisting of the reinforcing fillers,
(D) from 10 to 2000 parts by weight of solvent selected from the group consisting of organic solvents and of the low molecular weight cyclic or linear polyorganosilicon compounds,
(E) from 0 to 80 parts by weight of crosslinking agents selected from the group consisting of the dialkyl peroxides, diaryl peroxides, alkylaryl peroxides, aralkyl peroxides and hydroperoxides,
(F) from 0 to 50 parts by weight of condensation catalysts, and
(G) from 0 to 50 parts by weight of further substances selected from the group comprising inactive fillers, pigments, dyes, heat stabilizers, alkynols, benzotriazoles, triazoles, fibres and plastics powders.

2. Primer compositions according to Claim 1, **characterized in that** the organopolysiloxanes (A) have a viscosity of from 0.001 Pa.s to 50 000 Pa.s at 25°C.

3. Primer compositions according to Claim 1 or 2, **characterized in that** R¹ in the organopolysiloxane (A) is a vinyl radical.

4. Primer compositions according to Claim 1, 2 or 3, **characterized in that** X in the organosilicon compound (B) is a radical of the formula -OR , in which R² has the meaning stated in Claim 1.

5. Primer compositions according to any of Claims 1 to 4, **characterized in that** 3-(methacryloyloxy)propyltrimethoxysilane, 3-(methacryloyloxy)propyltriethoxysilane, vinyltrimethoxysilane or vinyltriethoxysilane is used as the organosilicon compound (B) of the formula (II).

6. Primer compositions according to any of Claims 1 to 4, **characterized in that** 1,2-bis(trimethoxysilyl)ethane or 1,2-bis(triethoxysilyl)ethane is used as the organosilicon compound (B) of the formula (III).

7. Primer compositions according to any of Claims 1 to 6, **characterized in that** reinforcing fillers selected from the group consisting of the pyrogenic and precipitated silicas, which may have been rendered water repellent, are used as fillers (C).

8. Process for the preparation of primer compositions according to any of Claims 1 to 7, **characterized in that** the constituents (A), (B), (C), (D) and, if required, (E), (F) and (G) are mixed.

9. Process for improving the adhesion of silicone rubber to a substrate by applying a primer composition according to any of Claims 1 to 7 to the substrate, allowing the primer composition to dry or crosslink in order to form a substrate covered with the primer, applying a crosslinkable silicone rubber composition to the substrate covered with the primer in order to obtain a composite, curing the composite in order to obtain an adhesive bond of a silicone rubber with a substrate.

10. The process according to Claim 9, **characterized in that** the silicone rubber is adhesively bonded to the substrate.

11. The process according to Claim 9 or 10, **characterized in that** the substrate is an organic plastic, a metal or a glass.

12. The process according to Claim 9, 10 or 11, **characterized in that** the substrate is a shaped article, a film or a coating.

13. The process according to any of Claims 9 to 12, **characterized in that** the crosslinkable silicone rubber composition is a peroxide-crosslinking or addition- crosslinking silicone rubber composition.

14. Shaped composite articles or composite materials produced by one of the processes according to any of Claims 9 to 13.

15. Use of the shaped composite articles or composite materials according to Claim 14 in the automotive, household appliances or electronics industry.

## Revendications

1. Compositions d'apprêt, constituées de
(A) 100 parties en poids d'organopolysiloxanes essentiellement linéaires de formule générale
R¹_{g}R_{3-g}SiO (SiR₂O)ₙ(SiRR¹O)ₘSiR_{3-g}R¹g (IV)
où
R signifie un radical hydroxyle ou un radical hydrocarboné monovalent, le cas échéant substitué par halogène ou contenant des atomes O, N, S ou P comprenant 1 à 20 atomes de carbone, qui est exempt de groupements aliphatiquement insaturés,
R¹ signifie un radical hydrocarboné monovalent, aliphatiquement insaturé, le cas échéant substitué par halogène ou contenant des atomes O ou N, comprenant 1 à 10 atomes de carbone,
g signifie 0, 1, 2 ou 3,
m vaut un nombre entier de 20 à 200 et
n vaut un nombre entier de 10 à 4000,
(B) 5 à 500 parties en poids de composés organosiliciés comprenant au moins un groupement hydrolysable choisi dans le groupe des formules générales
R²_{c}R³_{d}Si(X)ₑ (II)
et
(X)_{e'}R²_{c'}R³_{d'} Si-R⁴-SiR²_{c'}R³_{d'}Si(X)_{e'} (III)
où
R² signifie un radical hydrocarboné monovalent le cas échéant substitué par halogène comprenant 1 à 20 atomes de carbone,
R³ signifie un radical monovalent, choisi dans le groupe constitué des radicaux alcényle et des radicaux Y-R ⁴
X représente un groupe hydrolysable choisi parmi les groupements -OR², -NR²₂, R²-C (=O) -N (R²) - ou -O-N=CR²₂,
Y représente un radical monovalent, choisi dans le groupe constitué des radicaux anhydride, aminoalcoxy, acryloxy, méthacryloxy, N-aminoalkylamino, sulfone, sulfonate, phosphate, phosphonate, amino, N-alkylamino, époxy et mercapto,
R⁴ représente un radical hydrocarboné divalent, contenant le cas échéant des atomes 0, comprenant 1 à 20 atomes de carbone par radical et
c et d signifient à chaque fois 0, 1, 2 ou 3 et
e signifie 1, 2, 3 ou 4,
à condition que la somme c+d+e=4,
c' et d' signifient à chaque fois 0, 1 ou 2 et
e' signifie 1, 2 ou 3,
à condition que la somme c'+d'+e'=3,
(C) 5 à 500 parties en poids de charges, choisies dans le groupe des charges renforçantes,
(D) 10 à 2000 parties en poids de solvant, choisi dans le groupe constitué des solvants organiques et des composés polyorganosiliciés cycliques ou linéaires, de bas poids moléculaire,
(E) 0 à 80 parties en poids de réticulant, choisi dans le groupe constitué des dialkylperoxydes, des diarylperoxydes, des alkylarylperoxydes, des aralkylperoxydes et des hydroperoxydes,
(F) 0 à 50 parties en poids de catalyseurs de condensation et
(G) 0 à 50 parties en poids d'autres substances choisies dans le groupe constitué des charges inactives, des pigments, des colorants, des stabilisateurs à la chaleur, des alcynols, des benzotriazoles, des triazoles, des fibres et des poudres synthétiques.

2. Compositions d'apprêt selon la revendication 1, **caractérisées en ce que** les organopolysiloxanes (A) présentent une viscosité de 0,001 Pa.s à 50 000 Pa.s à 25°C.

3. Compositions d'apprêt selon la revendication 1 ou 2, **caractérisées en ce que** R¹ dans l'organopolysiloxane (A) est un radical vinyle.

4. Compositions d'apprêt selon la revendication 1, 2 ou 3, **caractérisées en ce que** X dans le composé organosilicié (B) est un radical de formule -OR², R² ayant la signification indiquée dans la revendication 1.

5. Compositions d'apprêt selon l'une quelconque des revendications 1 à 4, **caractérisées en ce qu'**on utilise comme composé organosilicié (B) de formule (II) le 3-(méthacryloxy)propyltriméthoxysilane, le 3-(méthacryloxy)propyltriéthoxysilane, le vinyltriméthoxysilane ou le vinyltriéthoxysilane.

6. Compositions d'apprêt selon l'une quelconque des revendications 1 à 4, **caractérisées en ce qu'**on utilise comme composé organosilicié (B) de formule (III) le 1,2-bis(triméthoxysilyl)éthane ou le 1,2-bis(triéthoxysilyl)éthane.

7. Compositions d'apprêt selon l'une quelconque des revendications 1 à 6, **caractérisées en ce qu'**on utilise comme charges (C) des charges renforçantes choisies dans le groupe constitué des silices pyrogènes et précipitées qui peuvent être hydrofugées.

8. Procédé pour la préparation des compositions d'apprêt selon l'une quelconque des revendications 1 à 7, **caractérisé en ce que** les constituants (A), (B), (C), (D) et le cas échéant (E), (F) et (G) sont mélangés.

9. Procédé pour améliorer l'adhérence d'un caoutchouc de silicone sur un substrat par application d'une composition d'apprêt selon l'une quelconque des revendications 1 à 7 sur le substrat, séchage ou réticulation de la composition d'apprêt de manière à former un substrat revêtu d'un apprêt, application d'une composition de caoutchouc de silicone réticulable sur le substrat revêtu de la composition d'apprêt, de manière à obtenir un composite, durcissement du composite, de manière à obtenir un composite adhésif d'un caoutchouc de silicone avec un substrat.

10. Procédé selon la revendication 9, **caractérisé en ce que** le caoutchouc de silicone est collé avec le substrat.

11. Procédé selon la revendication 9 ou 10, **caractérisé en ce que** le substrat est un matériau synthétique organique, un métal ou un verre.

12. Procédé selon la revendication 9, 10 ou 11, **caractérisé en ce que** le substrat est une pièce façonnée, une feuille ou un revêtement.

13. Procédé selon l'une quelconque des revendications 9 à 12, **caractérisé en ce que** la composition de caoutchouc de silicone réticulable est une composition de caoutchouc de silicone réticulant par un peroxyde ou par addition.

14. Pièces façonnées composites ou matériaux composites, produits par un des procédés selon les revendications 9 à 13.

15. Utilisation des pièces façonnées composites ou des matériaux composites selon la revendication 14 dans l'industrie automobile, des appareils domestiques ou électronique.
